# EUROPÄISCHE PATENTSCHRIFT

(11) **EP 1 957 829 B1**
(45) Veröffentlichungstag und Bekanntmachung des Hinweises auf die Patenterteilung: **29.09.2010**
(21) Anmeldenummer: 06819793.8
(22) Anmeldetag: 28.11.2006
(51) Int. Cl.: F16H 7/12

(54) **UMLENKROLLE FÜR EIN ZUGMITTEL**
DEFLECTION PULLEY FOR A TRACTION MEANS
POULIE DE RENVOI POUR UN MOYEN DE TRACTION

(30) Priorität: 01.12.2005 DE 102005057297
(43) Veröffentlichungstag der Anmeldung: 20.08.2008
(73) Patentinhaber: Schaeffler Technologies GmbH & Co. KG, 91074 Herzogenaurach (DE)
(72) Erfinder: KAPFER, Benoit, F-67170 Brumath (FR); HERRMANN, Jacky, F-67500 Haguenau (FR); EINSETLER, Constant, F-67110 Griesbach (FR)
(86) Internationale Anmeldenummer: PCT/EP2006/068968
(87) Internationale Veröffentlichungsnummer: WO 2007/063055

(56) Entgegenhaltungen:
- EP-A1- 0 694 703
- DE-A1- 3 719 479
- DE-A1- 10 024 318
- DE-A1- 10 209 673
- DE-A1- 10 333 673
- DE-A1- 10 333 876
- DE-U1- 9 307 931
- DE-U1- 29 609 380

## Beschreibung

### Gebiet der Erfindung

Die Erfindung betrifft eine Umlenkrolle oder eine Spannvorrichtung für ein Zugmittel wie Riemen, Band oder Kette, mit einem verschwenkbar an einem Maschinenteil angeordneten Spannarm, an welchem eine Umlenkrolle für das Zugmittel über ein Wälzlager drehbar gelagert ist, und mit einer den Lagerbereich der Umlenkrolle abdeckenden Schutzkappe, welche kraftschlüssig und/oder formschlüssig an der Umlenkrolle gehalten ist.

Mit der Schutzkappe einer Umlenkrolle oder einer Spannvorrichtung soll der Lagerbereich der Umlenkrolle gegen das Eindringen von Schmutz und Spritzwasser geschützt werden.

Es ist bereits bekannt, die Schutzkappe der Umlenkrolle nicht kraft- oder formschlüssig mit der Umlenkrolle zu verbinden, sondern als Schutzscheibe auszuführen, welche mit der Umlenkrolle einen ringförmigen Spalt bildet. Auf diese Weise ist zwischen der sich drehenden Umlenkrolle und der dieser gegenüber feststehenden Schutzscheibe eine Labyrinthabdichtung geschaffen, die jedoch noch nicht die gewünschte hohe Abdichtungswirkung ermöglicht.

Es ist auch bekannt, an der Umlenkrolle mit einer Stahllaufscheibe einen Bord für die lösbare Befestigung der Schutzkappe anzuformen. Hier bildet jedoch z. B. das Bördeln des Bordes durch Rollverformung einen zusätzlichen Verfahrensschritt des Herstellungsverfahrens der Umlenkrolle, so dass Mehrkosten entstehen.

Die gattungsmäßige Druckschrift DE 100 24 318 A1 zeigt eine Spannvorrichtung der eingangs genannten Art. Wie dort aus Figur 1 der Zeichnung hervorgeht, ist auf eine Nabe der Umlenkrolle eine Schutzkappe axial aufgesteckt und kraftschlüssig gehalten. Bei einer solchen Anordnung mit Stahllaufscheibe ist es auch bekannt, an der Nabe der Umlenkrolle eine Schnapprille durch Eindrehen anzubringen, in welche die Schutzkappe mit einem Wulst einrasten kann, so dass eine formschlüssige Verbindung geschaffen ist. Hier handelt es sich jedoch wegen des erforderlichen zusätzlichen Drehverfahrens um eine teuere Lösung.

### Zusammenfassung der Erfindung

Der Erfindung liegt die Aufgabe zugrunde, eine Umlenkrolle oder eine Spannvorrichtung mit einer Umlenkrollen-Schutzkappen-Einheit zu schaffen, welche einen hohen Schutz gegen das Eindringen von Schmutz und Spritzwasser gewährleistet, wobei sich die Umlenkrolle in einem einfachen Verfahren ohne zusätzliche Verfahrensschritte herstellen lassen soll.

Diese Aufgabe wird erfindungsgemäß dadurch gelöst, dass die Umlenkrolle als Stahlblechlaufscheibe ausgebildet ist und zur Halterung der Schutzkappe eine Schnapprille aufweist, welche von einem konisch nach außen verformten Endbereich der Blechlaufscheibe gebildet ist, wobei der Endbereich ein gegenüber der Blechdicke der Blechlaufscheibe geringeres Dickenmaß aufweist.

Auf diese Weise lässt sich die als Blechlaufscheibe ausgebildete Umlenkrolle vollständig durch ein einziges Ziehverfahren, z. B. auf einer Stufenpresse, herstellen. Dabei wird also auch die vorgeschlagene Schnapprille zur Halterung der Schutzkappe während des Ziehverfahrens der Blechlaufscheibe hergestellt. Bei dieser Ausführung werden somit zusätzliche Herstellungsverfahren, wie das Bördeln des Endbereichs durch Rollverformung oder die Drehnacharbeit zum Einbringen einer Schnapprille vermieden. Zur Herstellung der Schnapprille braucht das Material der Blechlaufscheibe in dem die Schutzkappe aufnehmenden Endbereich nur dünner als in den übrigen Bereichen gezogen zu werden, wonach der Endbereich konisch nach außen verformt werden kann, um die Schnapprille zu bilden.

Infolge der erfindungsgemäßen Schnappgeometrie lässt sich die Schutzkappe leicht auf die Umlenkrolle axial aufstecken und von dort abziehen, ohne dass die Schnappfunktion beeinträchtigt wird. Die Schutzkappe dichtet somit den Lagerbereich der Umlenkrolle gegen Eindringen von Schmutz und Wasserstrahlen ab.

### Kurze Beschreibung der Zeichnungen

Ein Ausführungsbeispiel der Erfindung ist in der Zeichnung dargestellt und wird im Vergleich mit Umlenkrollenausführungen nach dem vorbekannten Stand der Technik im Folgenden näher beschrieben.

Es zeigen in Ausschnitten:
- Figur 1: eine erfindungsgemäße Umlenkrollen- oder Spannrollen- Schutzkappeneinheit, welche an einem Spannarm ange- ordnet ist, in einem Axialschnitt;
- Figuren 2 bis 4: drei vorbekannte Umlenkrollen-Schutzkappen-Ein- heiten in Darstellungen, welche der Figur 1 entspre- chen.

### Ausführliche Beschreibung der Zeichnungen

Die in den Zeichnungsfiguren dargestellten Einheiten sind jeweils an einem Spannarm 1 gehalten, der an einem nicht dargestellten Maschinenteil schwenkbar gelagert ist. Das Maschinenteil kann beispielsweise an einer Brennkraftmaschine befestigt sein. An jedem Spannarm 1 ist eine Umlenkrolle für ein Zugmittel über ein Wälzlager 2 drehbar gelagert. Die Drehachse des Wälzlagers 2 verläuft dabei parallel zur Schwenkachse des Spannarms 1. Der Lagerinnenring stützt sich axial an einer Anlagefläche 3 des Spannarms 1 ab und wird dort von einer Schraube 4, welche in eine Gewindebohrung 5 des Spannarms 1 eingeschraubt ist, gehalten. An dem Lageraußenring des Wälzlagers 2 ist die Laufscheibe 13 befestigt. Der Lagerbereich des Wälzlagers 2 ist mit einer Schutzkappe 15, die sich an einem axialen Ende der Umlenkrolle anschließt, abgedeckt und nach außen abgedichtet.

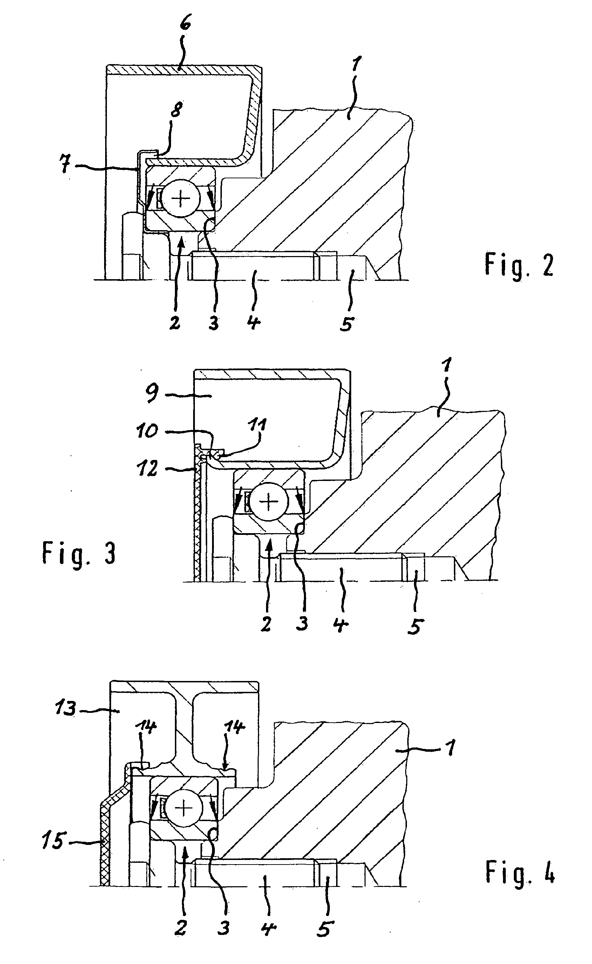

Die in Figur 2 dargestellte Einheit weist eine Umlenkrolle auf, welche als Blechlaufscheibe 6 ausgebildet ist. Ihr als Nabe wirkender innerer Teil wird von einer als Schutzscheibe 7 ausgebildeten Schutzkappe umfasst, wobei ein ringförmiger Spalt 8 zwischen der Blechlaufscheibe 6 und der Schutzscheibe 7 eingehalten ist. Auf diese Weise ist eine Labyrinthabdichtung des Bereichs des Wälzlagers 2 gebildet. Diese ermöglicht jedoch nicht die gewünschte hohe Abdichtungswirkung.

Die Einheit nach Figur 3 weist ebenfalls eine Umlenkrolle auf, die als Blechlaufscheibe 9 ausgebildet ist. Die Blechlaufscheibe 9 ist mit einem angeformten Bord 10 versehen, der von einem Wulst 11 einer Schutzkappe 12 umgriffen wird. Diese Blechlaufscheibe 9 hat den Nachteil, dass für die Herstellung des Bordes 10 ein zusätzlicher Verfahrensschritt erforderlich ist.

Figur 4 zeigt eine massive Laufscheibe 13 mit einer Nabe, in deren beiden axialen Endbereichen Schnapprillen 14 am äußeren Umfang eingearbeitet sind. Auf die Nabe der Umlenkrolle 13 ist eine Schutzkappe 15 aufgesteckt und dort mit angeformten Wülsten gehalten, die in die benachbarte Schnapprille 14 eingerastet sind. Diese Ausführung erfordert bei der Herstellung der Laufscheibe 13 die Bildung der Schnapprillen 14, beispielsweise durch Eindrehen, als zusätzlichen Arbeitsgang.

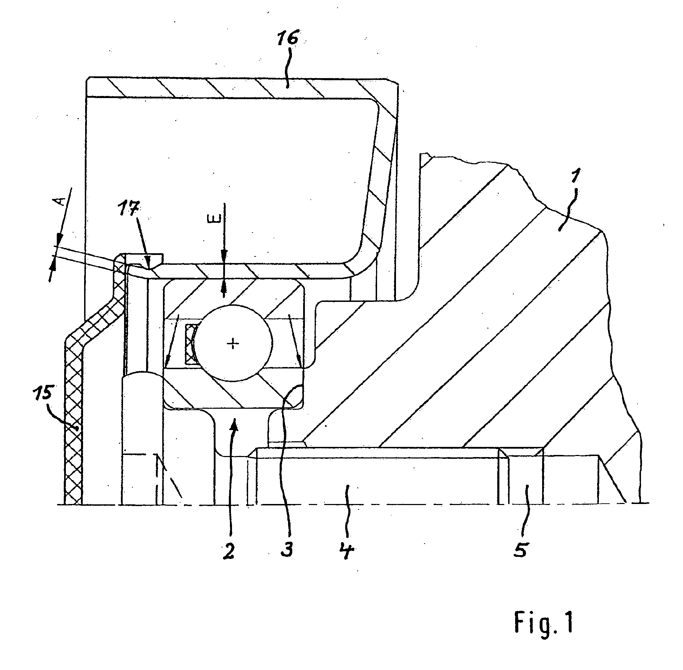

Die in Figur 1 dargestellte Umlenkrollen-Schutzkappen-Einheit weist eine Schutzkappe 15 auf, wie sie in Figur 4 dargestellt ist, und eine als Blechlaufscheibe 16 ausgebildete Umlenkrolle. Erfindungsgemäß ist eine Schnapprille 17 in einem axialen Endbereich des Nabenteils der Blechlaufscheibe 16 dadurch ausgebildet, dass die Blechdicke "A" hier kleiner ist, als die Blechdicke "E" im übrigen Verlauf der Blechlaufscheibe 16, und dass dieser Endbereich konisch nach außen verformt ist. Eine solche Blechlaufscheibe 16 hat den Vorteil, dass sie sich mit der Schnapprille 17 in einem einzigen Arbeitsgang oder Arbeitsverfahren formen lässt.

### Bezugszeichen

- 1: Spannarm
- 2: Wälzlager
- 3: Anlagefläche
- 4: Schraube
- 5: Gewindebohrung
- 6: Blechlaufscheibe
- 7: Schutzscheibe
- 8: Spalt
- 9: Blechlaufscheibe
- 10: Bord
- 11: Wulst
- 12: Schutzkappe
- 13: Laufscheibe
- 14: Schnapprille
- 15: Schutzkappe
- 16: Blechlaufscheibe
- 17: Schnapprille
- A: Dickenmaß
- E: Blechdicke

## Patentansprüche

1. Spannvorrichtung für ein Zugmittel wie Riemen, Band oder Kette, mit einem verschwenkbar an einem Maschinenteil angeordneten Spannarm (1), an welchem eine Spannrolle oder Umlenkrolle für das Zugmittel über ein Wälzlager (2) drehbar gelagert ist, und mit einer den Lagerbereich der Spannrolle abdeckenden Schutzkappe (15), welche kraftschlüssig und/oder formschlüssig an der Spannrolle gehalten ist, **dadurch gekennzeichnet, dass** die Spannrolle oder Umlenkrolle als Blechlaufscheibe (16) ausgebildet ist und zur Halterung der Schutzkappe (15) eine Schnapprille (17) aufweist, welche von einem konisch nach außen verformten Endbereich der Blechlaufscheibe (16) gebildet ist, wobei der Endbereich ein gegenüber der Blechdicke (E) der Blechlaufscheibe (16) geringeres Dickenmaß (A) aufweist.

## Claims

1. Tensioning device for a traction mechanism such as a belt, strap or chain, having a tensioning arm (1) which is pivotably arranged on a machine part and on which a tensioning roller or deflecting roller for the traction means is rotatably mounted by means of a rolling bearing (2), and having a protective cap (15) which covers the bearing region of the tensioning roller, which protective cap (15) is held in a non-positively and/or positively locking fashion on the tensioning roller, **characterized in that** the tensioning roller or deflecting roller is formed as a sheet-metal pulley (16) and, to retain the protective cap (15), has a snap groove (17) which is formed by a conically outwardly formed end region of the sheet-metal pulley (16), with the end region having a smaller thickness (A) than the sheet-metal thickness (E) of the sheet-metal pulley (16).

## Revendications

1. Dispositif de tensionnement pour un moyen de traction comme une courroie, une bande ou une chaîne, comprenant un bras de tensionnement (1) disposé de manière pivotante sur une pièce de machine, sur lequel est montée à rotation par le biais d'un palier à roulement (2) une poulie de tensionnement ou une poulie de renvoi pour le moyen de traction, et comprenant un capuchon de protection (15) recouvrant la zone de support de la poulie de tensionnement, qui est maintenu contre la poulie de tensionnement par engagement par force et/ou par engagement par correspondance géométrique, **caractérisé en ce que** la poulie de tensionnement ou la poulie de renvoi est réalisée sous forme de disque de roulement en tôle (16) et présente, pour la fixation du capuchon de protection (15), une gorge d'encliquetage (17), qui est formée par une région d'extrémité du disque de roulement en tôle (16) déformée sous forme conique vers l'extérieur, la région d'extrémité présentant une dimension d'épaisseur (A) plus petite que l'épaisseur de tôle (E) du disque de roulement en tôle (16).
